# EUROPEAN PATENT SPECIFICATION

(11) **EP 4 506 869 B1**
(45) Date of publication and mention of the grant of the patent: **06.05.2026**
(21) Application number: 23190510.0
(22) Date of filing: 09.08.2023
(51) Int. Cl.: H04L 9/40, G06Q 10/02, G06Q 10/0631, G07B 15/00, G07C 9/00, G06F 21/44, G06Q 50/43

(54) **A METHOD AND SYSTEM FOR GRANTING ACCESS TO A VEHICLE**
VERFAHREN UND SYSTEM ZUR GEWÄHRUNG DES ZUGANGS ZU EINEM FAHRZEUG
PROCÉDÉ ET SYSTÈME POUR DONNER ACCÈS À UN VÉHICULE

(43) Date of publication of application: 12.02.2025
(73) Proprietor: Ningbo Geely Automobile Research & Development Co., Ltd., Ningbo, Zhejiang 315336 (CN); Zhejiang Geely Holding Group Co., Ltd., Hangzhou, Zhejiang 310051 (CN)
(72) Inventor: LINDBERG NILSSON, Erik, 417 47 GÖTEBORG (SE); GARDTMAN, Angelika, 412 49 GÖTEBORG (SE); JOHANNESSON, Tobias, 417 06 GÖTEBORG (SE)
(74) Representative: Zacco Sweden AB

(56) References cited:
- US-A1- 2013 325 521
- US-A1- 2018 204 399
- US-A1- 2019 259 227
- US-A1- 2023 106 867

## Description

### Technical field

The present disclosure relates to a system capable of granting access to a vehicle when the vehicle is not connected to a wide area communication network, a method for granting access to a vehicle when the vehicle is not connected to the internet and a computer program product. More specifically, the disclosure relates to a system capable of granting access to a vehicle when the vehicle is not connected to a wide area communication network, a method for granting access to a vehicle when the vehicle is not connected to the internet and a computer program product as defined in the introductory parts of the independent claims.

### Background art

It has become more and more popular to not own your own vehicle but instead share vehicles with other vehicle occupants. Examples of sharing vehicles are e.g. renting vehicles, leasing or subscribing to a vehicle, or sharing vehicles among vehicle occupants in a vehicle pool etc. A vehicle owner can also rent or lend the vehicle to another vehicle occupant.

Different vehicle occupants can reserve and use the same vehicle at different times.

The vehicle is often communicating with a remote server via a wide area communication network, so that the access to the vehicle, and the reservation of the vehicle, can be managed by communicating directly with the vehicle over the wide area communication network.

However, there can be situations when the vehicle cannot access the wide area communication network.

In an example, if a vehicle is parked in an underground garage without any access to the wide area communication network, then the access and booking cannot be managed by communicating with the vehicle over the wide area communication network.

In a further example, if a vehicle is parked in a rural area without any access to the wide area communication network, then the access and booking cannot be managed by communicating with the vehicle over the wide area communication network.

Relevant prior art is disclosed in US2019/259227A1 and US2013/325521A1 which both disclose vehicle access using a mobile phone during car sharing / rental.

### Summary

Access to the vehicle can be managed digitally by the use of digital keys that are downloaded to the vehicle before the reservation starts. This requires that the vehicle has access to the wide area communication network.

There is therefore a desire to be able to manage access to the vehicle using digital keys when the vehicle cannot communicate over the wide area communication network.

There is also a desire to manage the access to the vehicle in a secure and reliable way.

It is an object of the present disclosure to mitigate, alleviate or eliminate one or more of the above-identified deficiencies and disadvantages in the prior art and solve at least the above mentioned problem.

According to a first aspect there is provided a system capable of granting access to a vehicle when the vehicle is not connected to a wide area communication network.

The system comprises an electronic device configured to request access to the vehicle by making a reservation of the vehicle, a remote node configured to communicate via the wide area communication network with the vehicle and configured to manage the reservation of the vehicle, and a processing circuitry operatively connected to the electronic device and the remote node.

The processing circuitry is configured to send, from a remote node to an electronic device, a digital regular key via a wide area communication network, attempt to send, from the remote node to the vehicle via the wide area communication network, a reservation data and the digital regular key, and in a determination that the reservation data and the digital regular key cannot be sent from the remote node to the vehicle due to that the vehicle is not connected to the wide area communication network, send, from the remote node to the electronic device, the reservation data and a digital backup key, send, from the electronic device to the vehicle via a local communication network, the digital backup key, and determine if the identity of the digital backup key, received at the vehicle from the electronic device, is associated with the identity of a backup key stored in the memory of the vehicle, and in a determination that the identity of the digital backup key received at the vehicle from the electronic device is associated with the identity of the backup key stored in the memory of the vehicle grant access to an access management system of the vehicle for receiving the reservation data and/or the digital regular key at the vehicle.

An advantage with this first aspect is that the vehicle does not need to have a connection with the remote node via the wide area communication network, but access to the vehicle can still be managed in a secure and trusted way.

According to some embodiments, the processing circuitry is further configured to generate a digital backup key, configured to be distributed via a wide area communication network, and store the digital backup key in a memory at the vehicle.

An advantage with this embodiment is that the digital backup key, that is associated with the vehicle, can be generated and distributed to the vehicle while the vehicle has connection with the Internet via the wide area communication network, before the vehicle loses connection with the Internet via the wide area communication network. Another advantage is that the digital backup key can be generated before receiving any reservation request to access the vehicle.

According to some embodiments, the processing circuitry is further configured to receive, at the remote node, a reservation request from the electronic device indicative of a request to access the vehicle, and generate, at the remote node, reservation data and a digital regular key configured to grant access to the vehicle.

An advantage with this embodiment is that a secure digital regular key, that is associated with the vehicle, and configured to be distributed to the vehicle and to the electronic device, can be generated, and that the digital regular key is associated with the reservation data for granting access to the vehicle dependent on the reservation data.

According to some embodiments, the processing circuitry is further configured to send, from the electronic device to the vehicle via the local communication network, the reservation data and the digital regular key.

An advantage with this embodiment is that the vehicle does not need to have a connection with the remote node via the wide area communication network, but can still in a secure trusted way, grant access to the access management system of the vehicle for receiving the reservation data and/or the digital regular key at the vehicle .

According to some embodiments, the processing circuitry is further configured to determine that the vehicle establishes connection to the wide area communication network, and verify, via the wide area communication network by the remote node, the reservation data and the digital regular key previously received at the vehicle via the local communication network.

An advantage with this embodiment is that the node can verify correct usage of the digital regular key.

According to some embodiments, the processing circuitry is further configured to determine that the vehicle establishes connection to the wide area communication network, and send, from the vehicle to the remote node, information indicative of that the backup key stored in the memory of the vehicle is exhausted.

An advantage with this embodiment is that the node gets notified that the digital backup key stored in the memory of the vehicle needs to be replaced.

According to some embodiments, the processing circuitry is further configured to determine that the vehicle establishes connection to the wide area communication network, and generate a new digital backup key configured to be stored in the memory of the vehicle.

An advantage with this embodiment is that a new digital backup key, that is associated with the vehicle, can be generated and distributed to the vehicle while the vehicle has connection with the Internet via the wide area communication network, before the next time the vehicle loses connection with the Internet via the wide area communication network.

According to a second aspect there is provided a method for granting access to a vehicle when the vehicle is not connected to the Internet.

The method comprising the step of sending, from a remote node to an electronic device, a digital regular key via a wide area communication network, the step of attempting to send, from the remote node to the vehicle via the wide area communication network, the reservation data and the digital regular key, and in a determination that the reservation data and the digital regular key cannot be sent from the remote node to the vehicle due to that the vehicle is not connected to the wide area communication network, the step of sending, from the remote node to the electronic device, the reservation data and the digital backup key, the step of sending, from the electronic device to the vehicle via a local communication network, the digital backup key, and determining if the identity of the digital backup key, received at the vehicle from the electronic device, is associated with the identity of the backup key stored in the memory of the vehicle, and in a determination that the identity of the digital backup key received at the vehicle from the electronic device is associated with the identity of the backup key stored in the memory of the vehicle the step of granting access to an access management system of the vehicle for receiving the reservation data and/or the digital regular key at the vehicle.

An advantage with this second aspect is that the vehicle does not need to have a connection with the remote node via the wide area communication network, but access to the vehicle can still be managed in a secure and trusted way.

According to some embodiments, the method further comprises the step of generating a digital backup key, configured to be distributed via a wide area communication network, and the step of storing the digital backup key in a memory at the vehicle.

An advantage with this embodiment is that the digital backup key, that is associated with the vehicle, can be generated and distributed to the vehicle while the vehicle has connection with the Internet via the wide area communication network, before the vehicle loses connection with the Internet via the wide area communication network.

According to some embodiments, the step of receiving, at the remote node, a reservation request from the electronic device indicative of a request to access the vehicle, and the step of generating, at the remote node, reservation data and a digital regular key configured to grant access to the vehicle.

An advantage with this embodiment is that a secure digital regular key, that is associated with the vehicle, and configured to be distributed to the vehicle and to the electronic device, can be generated, and that the digital regular key is associated with the reservation data for granting access to the vehicle dependent on the reservation data.

According to some embodiments, the method further comprises the step of sending, from the electronic device to the vehicle via the local communication network, the reservation data and the digital regular key.

An advantage with this embodiment is that the vehicle does not need to have a connection with the remote node via the wide area communication network, but can still in a secure trusted way, grant access to the access management system of the vehicle for receiving the reservation data and/or the digital regular key at the vehicle.

According to some embodiments, the method further comprises the step of determining that the vehicle establishes connection to the wide area communication network, the step of verifying, via the wide area communication network by the remote node, the reservation data and the digital regular key previously received at the vehicle via the local communication network.

An advantage with this embodiment is that the node can verify correct usage of the digital regular key.

According to some embodiments, the method further comprises the step of in determining that the vehicle establishes connection to the wide area communication network, sending, from the vehicle to the remote node, information indicative of that the backup key stored in the memory of the vehicle is exhausted.

An advantage with this embodiment is that the node gets notified that the backup key stored in the memory of the vehicle needs to be replaced.

According to some embodiments, the method further comprises the step of in determining that the vehicle establishes connection to the wide area communication network, generating a new digital backup key configured to be stored in the memory of the vehicle.

An advantage with this embodiment is that a new digital backup key, that is associated with the vehicle, can be generated and distributed to the vehicle while the vehicle has connection with the Internet via the wide area communication network, before the next time the vehicle loses connection with the Internet via the wide area communication network.

According to a third aspect there is provided a computer program product comprising a non-transitory computer readable medium, having thereon a computer program comprising program instructions, the computer program being loadable into a processing circuitry and configured to cause execution of the method when the computer program is run by the processing circuitry.

Effects and features of the second and third aspects are to a large extent analogous to those described above in connection with the first aspect. Embodiments mentioned in relation to the first aspect are largely compatible with the second and third aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. Further, the herein disclosed method is not limited to the order of the method steps described since such method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows a system capable of granting access to a vehicle when the vehicle is not connected to a wide area communication network, according to an embodiment of the present disclosure.
Figures 2a-2f illustrates the steps of a method for granting access to a vehicle when the vehicle is not connected to the Internet:

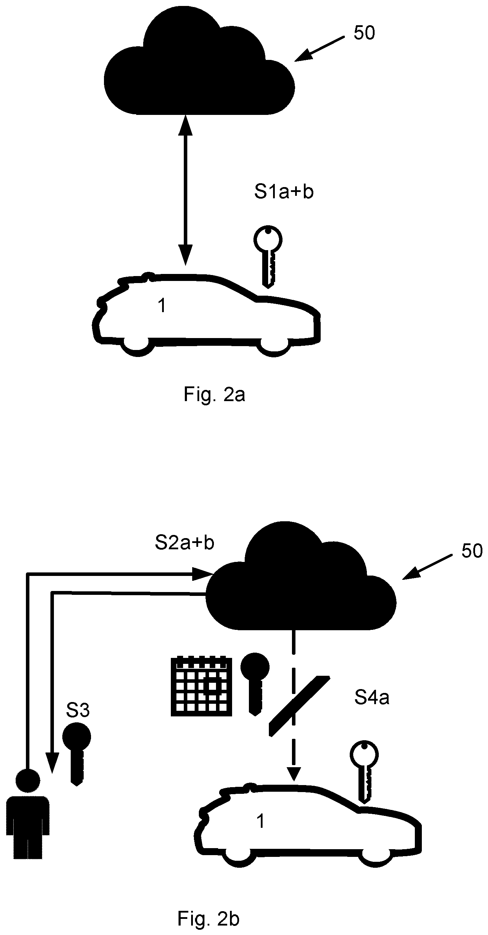

   Figure 2a illustrates the steps S1a+b, of the method.
   Figure 2b illustrates the steps S2a+b, S3, and S4a of the method.

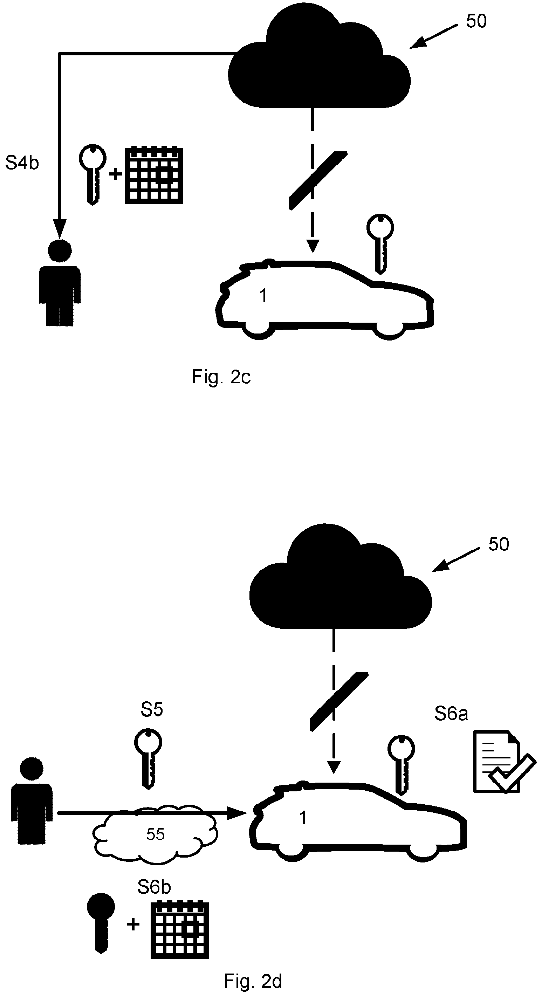

   Figure 2c illustrates the step S4b of the method.
   Figure 2d illustrates the steps S5, and S6a+b of the method.

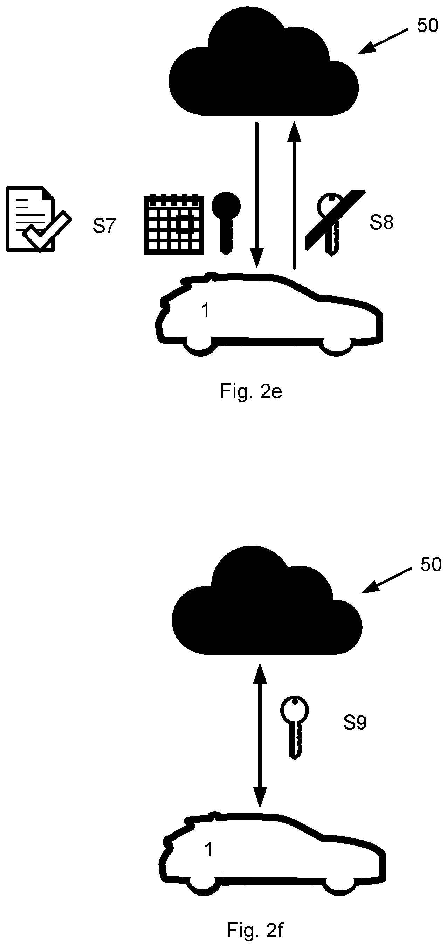

   Figure 2e illustrates the steps S7 and S8 of the method.
   Figure 2f illustrates the step S9 of the method.

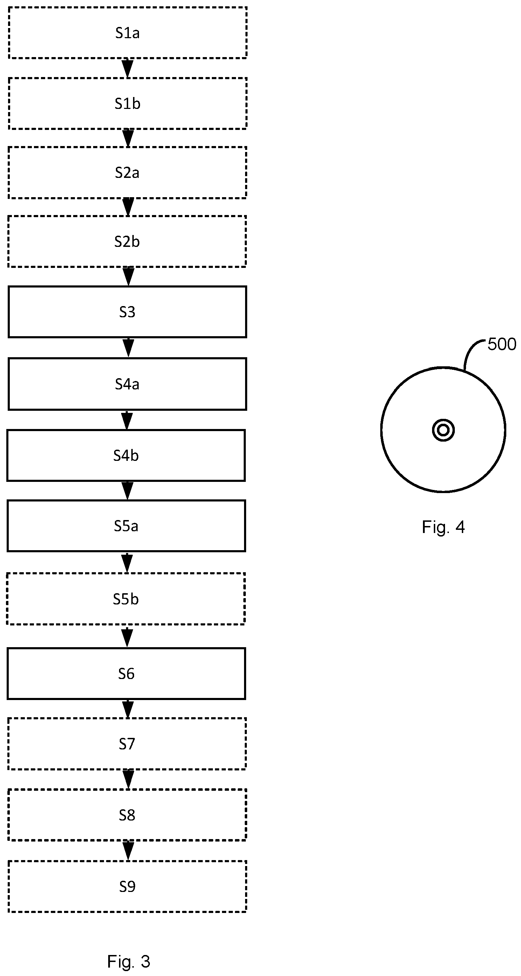

   Figure 3 illustrates a flow chart of the method steps according to the second aspect of the disclosure.
   Figure 4 illustrates a computer program product according to the third aspect of the disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

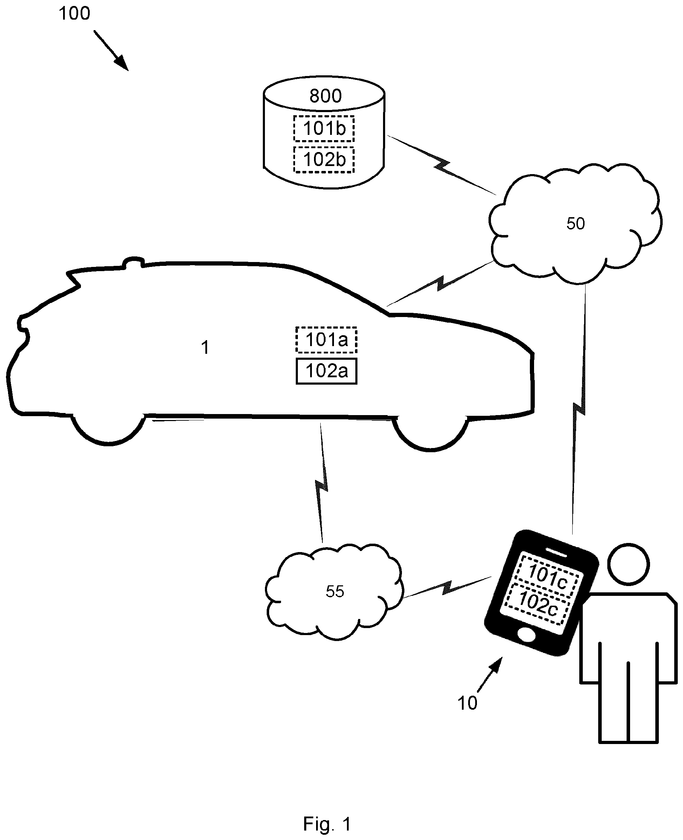

Figure 1 shows a system capable of granting access to a vehicle when the vehicle is not connected to a wide area communication network, according to an embodiment of the present disclosure.

The first aspect of this disclosure shows a system 100 capable of granting access to a vehicle 1 when the vehicle 1 is not connected to a wide area communication network 50.

According to some embodiments the wide area communication network 50, as illustrated in Figure 1, is a standardized wireless wide area network such as a Global System for Mobile Communications, GSM, Extended GSM, General Packet Radio Service, GPRS, Enhanced Data Rates for GSM Evolution, EDGE, Wideband Code Division Multiple Access, WCDMA, Long Term Evolution, LTE, Narrowband-loT, 5G, Worldwide Interoperability for Microwave Access, WiMAX or Ultra Mobile Broadband, UMB or similar network.

The system 100 comprises an electronic device 10 configured to request access to the vehicle 1 by making a reservation of the vehicle 1.

According to some embodiments the electronic device 10 is at least any of a portable smart phone, a tablet device, and a dedicated vehicle device.

The system 100 further comprises a remote node 800 configured to communicate via the wide area communication network 50 with the vehicle 1 and configured to manage the reservation of the vehicle 1.

According to some embodiments the remote node 800 is any of a server, a cloud computer and a remote electronic device.

The system 100 further comprises a processing circuitry 102a,102b,102c operatively connected to the electronic device 10 and the remote node 800.

According to some embodiments the processing circuitry 102a is the processing circuitry of an on-board vehicle computer and connectable to the system 100 via the wide area communication network 50, as illustrated in Figure 1.

According to some embodiments the processing circuitry 102b is comprised in a remote electronic device 800 and connectable to the system 100 via the wide area communication network 50, as illustrated in Figure 1.

According to some embodiments the processing circuitry 102c is comprised in an electronic device and connectable to the system 100 via the wide area communication network 50, as illustrated in Figure 1.

According to some embodiments the system 100 further comprises a memory 101a,101b,101c configured to store data.

According to some embodiments the memory 101a is the memory of an on-board vehicle computer and connectable to the system 100 via the wide area communication network 50, as illustrated in Figure 1.

According to some embodiments the memory 101b is comprised in a remote electronic device 800 and connectable to the system 100 via the wide area communication network 50, as illustrated in Figure 1.

According to some embodiments the memory 101c is comprised in the electronic device 10 and connectable to the system 100 via the wide area communication network 50, as illustrated in Figure 1.

The processing circuitry 102a,102b,102c is configured to send, from the remote node 800 to the electronic device 10, a digital regular key D-R-K via the wide area communication network 50.

According to some embodiments the digital regular key D-R-K is generated at the remote node 800.

According to some embodiments the digital regular key D-R-K is associated with the vehicle 1.

According to some embodiments, the digital regular key D-R-K comprises key data associated with the vehicle 1.

According to some embodiments, the digital regular key D-R-K comprises a code associated with the vehicle 1.

According to some embodiments, the digital regular key D-R-K comprises linking data for linking with the vehicle 1 at the remote node 800.

The processing circuitry 102a,102b,102c is further configured to attempt to send, from the remote node 800 to the vehicle 1 via the wide area communication network 50, a reservation data and the digital regular key D-R-K.

According to some embodiments the reservation data comprising information defining at least any of an access level, an allowable access location, an access period, an access start time, an access end time, access to a predefined vehicle compartment, access via a predefined vehicle door, access to a predefined amount of energy for propelling the vehicle, and access to a predefined media content. According to some embodiments the reservation data controls the access of the digital regular key D-R-K. In an example the reservation data controls the access of the digital regular key D-R-K to e.g. only enable access the driver and passenger doors of the vehicle 1, but not the trunk of the vehicle 1.

In a determination that the reservation data and the digital regular key D-R-K cannot be sent from the remote node 800 to the vehicle 1 due to that the vehicle 1 is not connected to the wide area communication network 50 send, from the remote node 800 to the electronic device 10, the reservation data and a digital backup key D-BU-K.

According to some embodiments the digital backup key D-BU-K is generated at the remote node 800.

According to some embodiments the digital backup key D-BU-K is associated with the vehicle 1.

According to some embodiments, the digital backup key D-BU-K comprises key data associated with the vehicle 1.

According to some embodiments, the digital backup key D-BU-K comprises a code associated with the vehicle 1.

According to some embodiments, the digital backup key D-BU-K comprises linking data for linking with the vehicle 1 at the remote node 800.

According to some embodiments the digital backup key D-BU-K is configured to be used a predetermined number of times.

According to some embodiments the digital backup key D-BU-K is configured to only be functioning during a predetermined time period.

According to some embodiments the digital backup key D-BU-K is configured to only be functioning a predetermined time after first usage.

According to some embodiments the digital backup key D-BU-K is configured to only give access to a predefined access level.

The processing circuitry 102a,102b,102c is then further configured to send, from the electronic device 10 to the vehicle 1 via a local communication network 55, the digital backup key D-BU-K.

The local communication network 55 is illustrated in Figure 1. According to some embodiments the local communication network is a local wireless communication network. According to some embodiments the local communication network 55 is a standardized wireless local area network such as a Wireless Local Area Network, WLAN, Bluetooth^{™}, ZigBee, Ultra-Wideband, Radio Frequency Identification, RFID, or similar network.

According to some embodiments the local communication network is a wired communication network. In an example the electronic device 10 is connected to the vehicle 1 via a cable or by a plug and socket connection.

The processing circuitry 102a,102b,102c is then further configured to determine if the identity of the digital backup key D-BU-K, received at the vehicle 1 from the electronic device 10, is associated with the identity of a backup key D-BU-K stored in the memory 101a of the vehicle 1, and in a determination that the identity of the digital backup key D-BU-K received at the vehicle 1 from the electronic device 10 is associated with the identity of the backup key D-BU-K stored in the memory 101a of the vehicle 1, grant access to an access management system of the vehicle 1 for receiving the reservation data and/or the digital regular key D-R-K at the vehicle 1.

An advantage with this first aspect is that the vehicle 1 does not need to have a connection with the remote node 800 via the wide area communication network 50, but access to the vehicle 1 can still be managed in a secure and trusted way.

According to some embodiments, the communication between the remote node 800 and the electronic device 10 is encrypted. According to some embodiments, the communication between the remote node 800 and the vehicle 1 is encrypted.

According to some embodiments at least any of the digital regular key D-R-K and the backup key D-BU-K is encrypted.

An advantage with the encryption is that an encrypted digital regular key D-R-K or an encrypted backup key D-BU-K cannot easily be manipulated. In an example, this will hinder a user of the electronic device 10 to e.g. manipulate any of the digital regular key D-R-K and the backup key D-BU-K to get access to the vehicle.

According to some embodiments the access management system is configured to manage at least a first digital key for granting access to the vehicle 1.

According to some embodiments the access management system is configured to manage reservation data and/or at least a first digital key.

According to some embodiments the access management system is configured to receive the reservation data and/or the digital regular key D-R-K and/or the digital backup key D-BU-K for managing access to the vehicle 1.

According to some embodiments the processing circuitry 102a,102b,102c is further configured to send, from the remote node 800 to the electronic device 10, reservation data via the wide area communication network 50. In an example the reservation data is sent to the electronic device 10 from the remote node 800 via the wide area communication network 50 a predetermined time before the actual intended use of the vehicle 1.

According to some embodiments the access management system is configured to receive the reservation data and/or the digital regular key D-R-K via at least any of the wide area communication network 50 and the local communication network 55.

According to some embodiments the processing circuitry 102a,102b,102c is further configured to generate, the digital backup key D-BU-K, configured to be distributed via the wide area communication network 50, and store the digital backup key D-BU-K in a memory 101a at the vehicle 1 .

In an example the digital backup key D-BU-K is sent to the vehicle 1 from the remote node 800 via the wide area communication network 50 a predetermined time before an actual intended use of the vehicle 1.

An advantage with this embodiment is that the digital backup key D-BU-K, that is associated with the vehicle 1, can be generated and distributed to the vehicle 1 while the vehicle 1 has connection with the Internet via the wide area communication network 50, before the vehicle 1 loses connection with the Internet via the wide area communication network 50.

According to some embodiments the processing circuitry 102a,102b,102c is further configured to receive, at the remote node 800, a reservation request from the electronic device 10 indicative of a request to access the vehicle 1, and generate, at the remote node 800, reservation data and a digital regular key D-R-K configured to grant access to the vehicle 1.

An advantage with this embodiment is that a secure digital regular key, that is associated with the vehicle, and configured to be distributed to the vehicle and to the electronic device, can be generated, and that the digital regular key is associated with the reservation data for granting access to the vehicle dependent on the reservation data.

According to some embodiments the processing circuitry 102a,102b,102c is further configured to send, from the electronic device 10 to the vehicle 1 via the local communication network 55, the reservation data and the digital regular key D-R-K.

An advantage with this embodiment is that the vehicle 1 does not need to have a connection with the remote node 800 via the wide area communication network 50, but can still in a secure trusted way, grant access to the access management system of the vehicle 1 for receiving the reservation data and/or the digital regular key D-R-K at the vehicle 1.

According to some embodiments the processing circuitry 102a,102b,102c is further configured to determine that the vehicle 1 establishes connection to the wide area communication network 50, and verify, via the wide area communication network 50 by the remote node, 800 the reservation data and the digital regular key D-R-K previously received at the vehicle 1 via the local communication network 55.

An advantage with this embodiment is that the node 800 can verify correct usage of the digital regular key D-R-K.

According to some embodiments in determining that the reservation data and the digital regular key D-R-K is successfully verified, enabling the electronic device 10 to use the digital regular key D-R-K to grant access the access management system of the vehicle 1.

According to some embodiments the processing circuitry 102a,102b,102c is further configured to determine that the vehicle 1 establishes connection to the wide area communication network 50, and send, from the vehicle 1 to the remote node 800, information indicative of that the backup key D-BU-K stored in the memory 101a of the vehicle 1 is exhausted.

An advantage with this embodiment is that the node 800 gets notified that the digital backup key D-BU-K stored in the memory 101a of the vehicle 1 needs to be replaced.

According to some embodiments the electronic device 10 is configured to send, to the remote node 800, information indicative of that the digital backup key D-BU-K stored in the memory of the vehicle is exhausted.

According to some embodiments the processing circuitry 102a,102b,102c is further configured to determine that the vehicle 1 establishes connection to the wide area communication network 50, and generate a new digital backup key D-BU-K configured to be stored in the memory 101a of the vehicle 1.

An advantage with this embodiment is that a new digital backup key, that is associated with the vehicle, can be generated and distributed to the vehicle while the vehicle has connection with the Internet via the wide area communication network, before the next time the vehicle loses connection with the Internet via the wide area communication network.

The second aspect of this disclosure shows a method for granting access to a vehicle 1 when the vehicle 1 is not connected to the Internet.

Figures 2a-2e illustrates the steps of the method. Figure 3 illustrates a flow chart of the method steps according to the second aspect of the disclosure.

The method comprising the step of S3 sending, from a remote node 800 to an electronic device 10, a digital regular key D-R-K via a wide area communication network 50 as illustrated in Figure 2b.

The method further comprising the step of S4a attempting to send, from the remote node 800 to the vehicle 1 via the wide area communication network 50, the reservation data and the digital regular key D-R-K, as illustrated in Figure 2b, and in a determination that the reservation data and the digital regular key D-R-K cannot be sent from the remote node 800 to the vehicle 1 due to that the vehicle 1 is not connected to the wide area communication network 50 the step of S4b sending, from the remote node 800 to the electronic device 10, the reservation data and the digital backup key D-BU-K as illustrated in Figure 2c.

The method further comprising the step of S5 sending, from the electronic device 10 to the vehicle 1 via a local communication network 55, the digital backup key D-BU-K; and S6a determining if the identity of the digital- backup key D-BU-K, received at the vehicle 1 from the electronic device 10, is associated with the identity of the backup key D-BU-K stored in the memory 101a of the vehicle 1 as illustrated in Figure 2d, and in a determination that the identity of the digital backup key D-BU-K received at the vehicle 1 from the electronic device 10 is associated with the identity of the backup key D-BU-K stored in the memory 101a of the vehicle 1 granting access to an access management system of the vehicle 1 for receiving the reservation data and/or the digital regular key D-R-K at the vehicle 1.

An advantage with this second aspect is that the vehicle 1 does not need to have a connection with the remote node 800 via the wide area communication network 50, but access to the vehicle 1 can still be managed in a secure and trusted way.

According to some embodiments, the method further comprising the step of S1a generating, a digital backup key D-BU-K, configured to be distributed via a wide area communication network 50, and the step of S1b storing the digital backup key D-BU-K in a memory 101a at the vehicle 1. Figure 2a illustrates the steps S1a+b of the method.

An advantage with this embodiment is that the digital backup key D-BU-K, that is associated with the vehicle 1, can be generated and distributed to the vehicle 1 while the vehicle 1 has connection with the Internet via the wide area communication network 50, before the vehicle 1 loses connection with the Internet via the wide area communication network 50.

According to some embodiments, the method further comprising the step of S2a receiving, at the remote node 800, a reservation request from the electronic device 10 indicative of a request to access the vehicle 1, and the step of S2b generating, at the remote node 800, reservation data and a digital regular key D-R-K configured to grant access to the vehicle 1. Figure 2b illustrates the steps S2a+b of the method.

An advantage with this embodiment is that a secure digital regular key, that is associated with the vehicle 1, and configured to be distributed to the vehicle 1 and to the electronic device 10, can be generated, and that the digital regular key D-R-K is associated with the reservation data for granting access to the vehicle 1 dependent on the reservation data.

According to some embodiments, the method further comprising the step of S6b sending, from the electronic device 10 to the vehicle 1 via the local communication network 55, the reservation data and the digital regular key D-R-K. Figure 2d illustrates the step S6b of the method.

An advantage with this embodiment is that the vehicle 1 does not need to have a connection with the remote node 800 via the wide area communication network 50, but can still in a secure trusted way, grant access to the access management system of the vehicle 1 for receiving the reservation data and/or the digital regular key D-R-K at the vehicle 1 .

According to some embodiments, the method further comprising the step of S7 determining that the vehicle 1 establishes connection to the wide area communication network 50, verifying, via the wide area communication network 50 by the remote node, 800 the reservation data and the digital regular key D-R-K previously received at the vehicle 1 via the local communication network 55.

An advantage with this embodiment is that the node 800 can verify correct usage of the digital regular key D-R-K.

According to some embodiments, the method further comprising the step of S8 in determining that the vehicle 1 establishes connection to the wide area communication network 50, sending, from the vehicle 1 to the remote node 800, information indicative of that the backup key D-BU-K stored in the memory 101a of the vehicle 1 is exhausted.

An advantage with this embodiment is that the node 800 gets notified that the backup key stored in the memory 101a of the vehicle 1 needs to be replaced.

According to some embodiments, the method further comprising the step of S9 in determining that the vehicle 1 establishes connection to the wide area communication network 50, generating a new digital backup key D-BU-K configured to be stored in the memory 101a of the vehicle 1.

An advantage with this embodiment is that a new digital backup key, that is associated with the vehicle 1, can be generated and distributed to the vehicle 1 while the vehicle has connection with the Internet via the wide area communication network 50, before the next time the vehicle 1 loses connection with the Internet via the wide area communication network 50.

The third aspect of this disclosure shows a computer program product according to the second aspect comprising a non-transitory computer readable medium, having thereon a computer program comprising program instructions, the computer program being loadable into the processing circuitry 102a,102b,102c and configured to cause execution of the method when the computer program is run by the processing circuitry 102a,102b,102c.

The person skilled in the art realizes that the present disclosure is not limited to the preferred embodiments described above. The person skilled in the art further realizes that modifications and variations are possible within the scope of the appended claims.

Additionally, variations to the disclosed embodiments can be understood and effected by the skilled person in practicing the claimed disclosure, from a study of the drawings, the disclosure, and the appended claims.

## Claims

1. A system (100) capable of granting access to a vehicle (1) when the vehicle (1) is not connected to a wide area communication network (50), the system (100) comprises:
an electronic device (10) configured to request access to the vehicle (1) by making a reservation of the vehicle (1);
a remote node (800) configured to communicate via the wide area communication network (50) with the vehicle (1) and configured to manage the reservation of the vehicle (1);
a processing circuitry (102a,102b,102c) operatively connected to the electronic device (10) and the remote node (800) configured to:
- send, from the remote node (800) to the electronic device (10), a digital regular key (D-R-K) via the wide area communication network (50);
- attempt to send, from the remote node (800) to the vehicle (1) via the wide area communication network (50), a reservation data of said reservation and the digital regular key (D-R-K), and in a determination that the reservation data and the digital regular key (D-R-K) cannot be sent from the remote node (800) to the vehicle (1) due to that the vehicle (1) is not connected to the wide area communication network (50):
- send, from the remote node (800) to the electronic device (10), the reservation data and a digital backup key (D-BU-K);
- send, from the electronic device (10) to the vehicle (1) via a local communication network (55), the digital backup key (D-BU-K); and
- determine if the identity of the digital backup key (D-BU-K), received at the vehicle (1) from the electronic device (10), is associated with the identity of a backup key (D-BU-K) stored in the memory (101a) of the vehicle (1), and
- in a determination that the identity of the digital backup key (D-BU-K) received at the vehicle (1) from the electronic device (10) is associated with the identity of the backup key (D-BU-K) stored in the memory (101a) of the vehicle (1)
- grant access to an access management system of the vehicle (1) for receiving the reservation data and/or the digital regular key (D-R-K) at the vehicle (1).

2. The system (100) according to claim 1, wherein the processing circuitry (102a,102b,102c) is further configured to:
- generate the digital backup key (D-BU-K), configured to be distributed via the wide area communication network (50); and
- store the digital backup key (D-BU-K) in the memory (101a) at the vehicle (1)

3. The system (100) according to any of the preceding claims, wherein the processing circuitry (102a,102b,102c) is further configured to:
- receive, at the remote node (800), a reservation request from the electronic device (10) indicative of a request to access the vehicle (1); and
- generate, at the remote node (800), the reservation data and the digital regular key (D-R-K) configured to grant access to the vehicle (1).

4. The system (100) according to any of the preceding claims, wherein the processing circuitry (102a,102b,102c) is further configured to:
- send, from the electronic device (10) to the vehicle (1) via the local communication network (55), the reservation data and the digital regular key (D-R-K).

5. The system (100) according to any of the preceding claims, wherein the processing circuitry (102a,102b,102c) is further configured to:
- determine that the vehicle (1) establishes connection to the wide area communication network (50), and
- verify, via the wide area communication network (50) by the remote node, (800) the reservation data and the digital regular key (D-R-K) previously received at the vehicle (1) via the local communication network (55).

6. The system (100) according to any of the preceding claims, wherein the processing circuitry (102a,102b,102c) is further configured to:
- determine that the vehicle (1) establishes connection to the wide area communication network (50), and
- send, from the vehicle (1) to the remote node (800), information indicative of that the backup key (D-BU-K) stored in the memory (101a) of the vehicle (1) is exhausted.

7. The system (100) according to any of the preceding claims, wherein the processing circuitry (102a,102b,102c) is further configured to:
- determine that the vehicle (1) establishes connection to the wide area communication network (50), and
generate a new digital backup key (D-BU-K) configured to be stored in the memory (101a) of the vehicle (1).

8. A method for granting access to a vehicle (1) when the vehicle (1) is not connected to a wide area communication network (50), the method comprising:
- (S3) sending, from a remote node (800) for managing a reservation of a vehicle (1) to an electronic device (10), a digital regular key (D-R-K) via the wide area communication network (50);
- (S4a) attempting to send, from the remote node (800) to the vehicle (1) via the wide area communication network (50), reservation data of said reservation and the digital regular key (D-R-K), and in a determination that the reservation data and the digital regular key (D-R-K) cannot be sent from the remote node (800) to the vehicle (1) due to that the vehicle (1) is not connected to the wide area communication network (50):
- (S4b) sending, from the remote node (800) to the electronic device (10), the reservation data and a digital backup key (D-BU-K);
- (S5) sending, from the electronic device (10) to the vehicle (1) via a local communication network (55), the digital backup key (D-BU-K); and
- (S6a) determining if the identity of the digital backup key (D-BU-K), received at the vehicle (1) from the electronic device (10), is associated with the identity of a backup key (D-BU-K) stored in the memory (101a) of the vehicle (1), and
- in a determination that the identity of the digital backup key (D-BU-K) received at the vehicle (1) from the electronic device (10) is associated with the identity of the backup key (D-BU-K) stored in the memory (101a) of the vehicle (1)
- granting access to an access management system of the vehicle (1) for receiving the reservation data and/or the digital regular key (D-R-K) at the vehicle (1).

9. The method according to according to claim 8 further comprising:
- (S1a) generating, the digital backup key (D-BU-K), configured to be distributed via the wide area communication network (50); and
- (S1b) storing the digital backup key (D-BU-K) in the memory (101a) at the vehicle (1).

10. The method according to any of the claims 8-9 further comprising:
- (S2a) receiving, at the remote node (800), a reservation request from the electronic device (10) indicative of a request to access the vehicle (1); and
- (S2b) generating, at the remote node (800), the reservation data and the digital regular key (D-R-K) configured to grant access to the vehicle (1).

11. The method according to any of the claims 8-10 further comprising:
- (S6b) sending, from the electronic device (10) to the vehicle (1) via the local communication network (55), the reservation data and the digital regular key (D-R-K).

12. The method according to any of the claims 8-11 further comprising:
- (S7) determining that the vehicle (1) establishes connection to the wide area communication network (50):
- verifying, via the wide area communication network (50) by the remote node, (800) the reservation data and the digital regular key (D-R-K) previously received at the vehicle (1) via the local communication network (55).

13. The method according to any of the claim 12 further comprising:
- (S8) in determining that the vehicle (1) establishes connection to the wide area communication network (50):
- sending, from the vehicle (1) to the remote node (800), information indicative of that the backup key (D-BU-K) stored in the memory (101a) of the vehicle (1) is exhausted.

14. The method according to according to claim 13 further comprising:
- (S9) in determining that the vehicle (1) establishes connection to the wide area communication network (50):
generating a new digital backup key (D-BU-K) configured to be stored in the memory (101a) of the vehicle (1).

15. A computer program product (500) comprising a non-transitory computer readable medium, having thereon a computer program comprising program instructions, the computer program being loadable into a processing circuitry (102a,102b,102c) and configured to cause execution of the method according to any of claims 8 through 14 when the computer program is run by the processing circuitry (102a,102b,102c).

## Patentansprüche

1. System (100), das in der Lage ist, Zugang zu einem Fahrzeug (1) zu gewähren, wenn das Fahrzeug (1) nicht mit einem Weitbereich-Kommunikationsnetz (50) verbunden ist, wobei das System (100) Folgendes umfasst:
eine elektronische Vorrichtung (10), die dazu konfiguriert ist, den Zugang zu dem Fahrzeug (1) durch Vornehmen einer Reservierung des Fahrzeugs (1) anzufordern;
einen Remote-Knoten (800), der dazu konfiguriert ist, über das Weitbereich-Kommunikationsnetz (50) mit dem Fahrzeug (1) zu kommunizieren, und dazu konfiguriert ist, die Reservierung des Fahrzeugs (1) zu verwalten;
eine Verarbeitungsschaltung (102a, 102b, 102c), die mit der elektronischen Vorrichtung (10) wirkverbunden ist, und der Remote-Knoten (800) zu Folgendem konfiguriert ist:
- Senden, von dem Remote-Knoten (800) an die elektronische Vorrichtung (10), eines digitalen regulären Schlüssels (D-R-K) über das Weitbereich-Kommunikationsnetz (50);
- Versuchen, von dem Remote-Knoten (800) an das Fahrzeug (1) über das Weitbereich-Kommunikationsnetz (50), ein Reservierungsdaten der Reservierung und den digitalen regulären Schlüssel (D-R-K) zu senden, und in einer Feststellung, dass die Reservierungsdaten und der digitale reguläre Schlüssel (D-R-K) nicht von dem Remote-Knoten (800) an das Fahrzeug (1) gesendet werden können, weil das Fahrzeug (1) nicht mit dem Weitbereich-Kommunikationsnetz (50) verbunden ist:
- Senden, von dem Remote-Knoten (800) an die elektronische Vorrichtung (10), der Reservierungsdaten und eines digitalen Backup-Schlüssels (D-BU-K);
- Senden, von der elektronischen Vorrichtung (10) an das Fahrzeug (1) über ein lokales Kommunikationsnetz (55), des digitalen Backup-Schlüssels (D-BU-K); und
- Feststellen, ob die Identität des digitalen Backup-Schlüssels (D-BU-K), der an dem Fahrzeug (1) von der elektronischen Vorrichtung (10) empfangen wurde, der Identität eines Backup-Schlüssels (D-BU-K), der in dem Speicher (101a) des Fahrzeugs (1) gespeichert ist, zugeordnet ist, und
- in einer Feststellung, dass die Identität des digitalen Backup-Schlüssels (D-BU-K), der an dem Fahrzeug (1) von der elektronischen Vorrichtung (10) empfangen wurde, der Identität des Backup-Schlüssels (D-BU-K), der in dem Speicher (101a) des Fahrzeugs (1) gespeichert ist, zugeordnet ist,
- Gewähren des Zugangs zu einem Zugangsverwaltungssystem des Fahrzeugs (1) zum Empfangen der Reservierungsdaten und/oder des digitalen regulären Schlüssels (D-R-K) an dem Fahrzeug (1).

2. System (100) nach Anspruch 1, wobei die Verarbeitungsschaltung (102a, 102b, 102c) ferner zu Folgendem konfiguriert ist:
- Erzeugen des digitalen Backup-Schlüssels (D-BU-K), der dazu konfiguriert ist, über das Weitbereich-Kommunikationsnetz (50) verteilt zu werden; und
- Speichern des digitalen Backup-Schlüssels (D-BU-K) in dem Speicher (101a) an dem Fahrzeug (1)

3. System (100) nach einem der vorhergehenden Ansprüche, wobei die Verarbeitungsschaltung (102a, 102b, 102c) ferner zu Folgendem konfiguriert ist:
- Empfangen, an dem Remote-Knoten (800), einer Reservierungsanforderung von der elektronischen Vorrichtung (10), die eine Anforderung zum Zugang zu dem Fahrzeug (1) angibt; und
- Erzeugen, an dem Remote-Knoten (800), der Reservierungsdaten und des digitalen regulären Schlüssels (D-R-K), der dazu konfiguriert ist, den Zugang zu dem Fahrzeug (1) zu gewähren.

4. System (100) nach einem der vorhergehenden Ansprüche, wobei die Verarbeitungsschaltung (102a, 102b, 102c) ferner zu Folgendem konfiguriert ist:
- Senden, von der elektronischen Vorrichtung (10) an das Fahrzeug (1) über das lokale Kommunikationsnetz (55), der Reservierungsdaten und des digitalen regulären Schlüssels (D-R-K).

5. System (100) nach einem der vorhergehenden Ansprüche, wobei die Verarbeitungsschaltung (102a, 102b, 102c) ferner zu Folgendem konfiguriert ist:
- Feststellen, dass das Fahrzeug (1) eine Verbindung mit dem Weitbereich-Kommunikationsnetz (50) herstellt, und
- Überprüfen, über das Weitbereich-Kommunikationsnetz (50) durch den Remote-Knoten (800), der Reservierungsdaten und des digitalen regulären Schlüssels (D-R-K), der zuvor an dem Fahrzeug (1) über das lokale Kommunikationsnetz (55) empfangen wurde.

6. System (100) nach einem der vorhergehenden Ansprüche, wobei die Verarbeitungsschaltung (102a, 102b, 102c) ferner zu Folgendem konfiguriert ist:
- Feststellen, dass das Fahrzeug (1) eine Verbindung mit dem Weitbereich-Kommunikationsnetz (50) herstellt, und
- Senden, von dem Fahrzeug (1) an den Remote-Knoten (800), von Informationen, die angeben, dass der Backup-Schlüssel (D-BU-K), der in dem Speicher (101a) des Fahrzeugs (1) gespeichert ist, verbraucht ist.

7. System (100) nach einem der vorhergehenden Ansprüche, wobei die Verarbeitungsschaltung (102a, 102b, 102c) ferner zu Folgendem konfiguriert ist:
- Feststellen, dass das Fahrzeug (1) eine Verbindung mit dem Weitbereich-Kommunikationsnetz (50) herstellt, und
Erzeugen eines neuen digitalen Backup-Schlüssels (D-BU-K), der dazu konfiguriert ist, in dem Speicher (101a) des Fahrzeugs (1) gespeichert zu werden.

8. Verfahren zum Gewähren des Zugangs zu einem Fahrzeug (1), wenn das Fahrzeug (1) nicht mit einem Weitbereich-Kommunikationsnetz (50) verbunden ist, wobei das Verfahren Folgendes umfasst:
- (S3) Senden, von einem Remote-Knoten (800) zum Verwalten einer Reservierung eines Fahrzeugs (1) an eine elektronische Vorrichtung (10), eines digitalen regulären Schlüssels (D-R-K) über das Weitbereich-Kommunikationsnetz (50);
- (S4a) Versuchen, von dem Remote-Knoten (800) an das Fahrzeug (1) über das Weitbereich-Kommunikationsnetz (50), Reservierungsdaten der Reservierung und den digitalen regulären Schlüssel (D-R-K) zu senden, und in einer Feststellung, dass die Reservierungsdaten und der digitale reguläre Schlüssel (D-R-K) nicht von dem Remote-Knoten (800) an das Fahrzeug (1) gesendet werden können, weil das Fahrzeug (1) nicht mit dem Weitbereich-Kommunikationsnetz (50) verbunden ist:
- (S4b) Senden, von dem Remote-Knoten (800) an die elektronische Vorrichtung (10), der Reservierungsdaten und eines digitalen Backup-Schlüssels (D-BU-K);
- (S5) Senden, von der elektronischen Vorrichtung (10) an das Fahrzeug (1) über ein lokales Kommunikationsnetz (55), des digitalen Backup-Schlüssels (D-BU-K); und
- (S6a) Feststellen, ob die Identität des digitalen Backup-Schlüssels (D-BU-K), der an dem Fahrzeug (1) von der elektronischen Vorrichtung (10) empfangen wurde, der Identität eines Backup-Schlüssels (D-BU-K), der in dem Speicher (101a) des Fahrzeugs (1) gespeichert ist, zugeordnet ist, und
- in einer Feststellung, dass die Identität des digitalen Backup-Schlüssels (D-BU-K), der an dem Fahrzeug (1) von der elektronischen Vorrichtung (10) empfangen wurde, der Identität des Backup-Schlüssels (D-BU-K), der in dem Speicher (101a) des Fahrzeugs (1) gespeichert ist, zugeordnet ist,
- Gewähren des Zugangs zu einem Zugangsverwaltungssystem des Fahrzeugs (1) zum Empfangen der Reservierungsdaten und/oder des digitalen regulären Schlüssels (D-R-K) an dem Fahrzeug (1).

9. Verfahren nach nach Anspruch 8, ferner umfassend:
- (S1a) Erzeugen des digitalen Backup-Schlüssels (D-BU-K), der dazu konfiguriert ist, über das Weitbereich-Kommunikationsnetz (50) verteilt zu werden; und
- (S1b) Speichern des digitalen Backup-Schlüssels (D-BU-K) in dem Speicher (101a) an dem Fahrzeug (1).

10. Verfahren nach einem der Ansprüche 8-9, ferner umfassend:
- (S2a) Empfangen, an dem Remote-Knoten (800), einer Reservierungsanforderung von der elektronischen Vorrichtung (10), die eine Anforderung zum Zugang zu dem Fahrzeug (1) angibt; und
- (S2b) Erzeugen, an dem Remote-Knoten (800), der Reservierungsdaten und des digitalen regulären Schlüssels (D-R-K), der dazu konfiguriert ist, den Zugang zu dem Fahrzeug (1) zu gewähren.

11. Verfahren nach einem der Ansprüche 8-10, ferner umfassend:
- (S6b) Senden, von der elektronischen Vorrichtung (10) an das Fahrzeug (1) über das lokale Kommunikationsnetz (55), der Reservierungsdaten und des digitalen regulären Schlüssels (D-R-K).

12. Verfahren nach einem der Ansprüche 8-11, ferner umfassend:
- (S7) Feststellen, dass das Fahrzeug (1) eine Verbindung mit dem Weitbereich-Kommunikationsnetz (50) herstellt:
- Überprüfen, über das Weitbereich-Kommunikationsnetz (50) durch den Remote-Knoten (800), der Reservierungsdaten und des digitalen regulären Schlüssels (D-R-K), der zuvor an dem Fahrzeug (1) über das lokale Kommunikationsnetz (55) empfangen wurde

13. Verfahren nach einem des Anspruchs 12, ferner umfassend:
- (S8) beim Feststellen, dass das Fahrzeug (1) eine Verbindung mit dem Weitbereich-Kommunikationsnetz (50) herstellt:
- Senden, von dem Fahrzeug (1) an den Remote-Knoten (800), von Informationen, die angeben, dass der Backup-Schlüssel (D-BU-K), der in dem Speicher (101a) des Fahrzeugs (1) gespeichert ist, verbraucht ist.

14. Verfahren nach nach Anspruch 13, ferner umfassend:
- (S9) beim Feststellen, dass das Fahrzeug (1) eine Verbindung mit dem Weitbereich-Kommunikationsnetz (50) herstellt:
Erzeugen eines digitalen Backup-Schlüssels (D-BU-K), der dazu konfiguriert ist, in dem Speicher (101a) des Fahrzeugs (1) gespeichert zu werden.

15. Computerprogrammprodukt (500), umfassend ein nichtflüchtiges computerlesbares Medium, das darauf ein Computerprogramm, umfassend Programmanweisungen, aufweist, wobei das Computerprogramm in eine Verarbeitungsschaltung (102a, 102b, 102c) ladbar ist und dazu konfiguriert ist, die Durchführung des Verfahrens nach einem der Ansprüche 8 bis 14 zu veranlassen, wenn das Computerprogramm durch die Verarbeitungsschaltung (102a, 102b, 102c) ausgeführt wird.

## Revendications

1. Système (100) capable d'accorder un accès à un véhicule (1) lorsque le véhicule (1) n'est pas connecté à un réseau de communication étendu (50), le système (100) comprend :
un dispositif électronique (10) configuré pour demander l'accès au véhicule (1) en réalisant une réservation du véhicule (1) ;
un nœud distant (800) configuré pour communiquer via le réseau de communication étendu (50) avec le véhicule (1) et configuré pour gérer la réservation du véhicule (1) ;
une circuiterie de traitement (102a, 102b, 102c) connectée de manière opérationnelle au dispositif électronique (10) et au nœud distant (800) configurée pour :
- envoyer, provenant du nœud distant (800) vers le dispositif électronique (10), une clé régulière numérique (D-R-K) via le réseau de communication étendu (50) ;
- tenter d'envoyer, provenant du nœud distant (800) vers le véhicule (1) via le réseau de communication étendu (50), une donnée de réservation de ladite réservation et la clé régulière numérique (D-R-K), et en cas de détermination du fait que la donnée de réservation et la clé régulière numérique (D-R-K) ne peuvent pas être envoyées provenant du nœud distant (800) vers le véhicule (1) du fait que le véhicule (1) n'est pas connecté au réseau de communication étendu (50) :
- envoyer, provenant du nœud distant (800) vers le dispositif électronique (10), la donnée de réservation et une clé de secours numérique (D-BU-K) ;
- envoyer, provenant du dispositif électronique (10) vers le véhicule (1) via un réseau de communication local (55), la clé de secours numérique (D-BU-K) ; et
- déterminer si l'identifiant de la clé de secours numérique (D-BU-K), reçue au niveau du véhicule (1) provenant du dispositif électronique (10), est associé à l'identifiant d'une clé de secours numérique (D-BU-K) stockée dans la mémoire (101a) du véhicule (1) ; et
- en cas de détermination du fait que l'identifiant de la clé de secours numérique (D-BU-K) reçu au niveau du véhicule (1) provenant du dispositif électronique (10) est associé à l'identifiant de la clé de secours numérique (D-BU-K) stockée dans la mémoire (101a) du véhicule (1) :
- accorder l'accès à un système de gestion d'accès du véhicule (1) pour la réception de la donnée de réservation et/ou de la clé régulière numérique (D-R-K) au niveau du véhicule (1).

2. Système (100) selon la revendication 1, dans lequel la circuiterie de traitement (102a, 102b, 102c) est en outre configurée pour :
- générer la clé de secours numérique (D-BU-K), configurée pour être distribuée via le réseau de communication étendu (50) ; et
- stocker la clé de secours numérique (D-BU-K) dans la mémoire (101a) au niveau du véhicule (1).

3. Système (100) selon l'une quelconque des revendications précédentes, dans lequel la circuiterie de traitement (102a, 102b, 102c) est en outre configurée pour :
- recevoir, au niveau du nœud distant (800), une demande de réservation provenant du dispositif électronique (10) indicative d'une demande d'accès au véhicule (1) ; et
- générer, au niveau du nœud distant (800), la donnée de réservation et la clé régulière numérique (D-R-K) configurées pour accorder l'accès au véhicule (1).

4. Système (100) selon l'une quelconque des revendications précédentes, dans lequel la circuiterie de traitement (102a, 102b, 102c) est en outre configurée pour :
- envoyer, provenant du dispositif électronique (10) vers le véhicule (1) via le réseau de communication local (55), la donnée de réservation et la clé régulière numérique (D-R-K).

5. Système (100) selon l'une quelconque des revendications précédentes, dans lequel la circuiterie de traitement (102a, 102b, 102c) est en outre configurée pour :
- déterminer que le véhicule (1) établit une connexion au réseau de communication étendu (50) ; et
- vérifier, via le réseau de communication étendu (50) par le nœud distant (800), la donnée de réservation et la clé régulière numérique (D-R-K) précédemment reçues au niveau du véhicule (1) via le réseau de communication local (55).

6. Système (100) selon l'une quelconque des revendications précédentes, dans lequel la circuiterie de traitement (102a, 102b, 102c) est en outre configurée pour :
- déterminer que le véhicule (1) établit une connexion au réseau de communication étendu (50) ; et
- envoyer, provenant du véhicule (1) vers le nœud distant (800), des informations indicatives du fait que la clé de secours numérique (D-BU-K) stockée dans la mémoire (101a) du véhicule (1) est épuisée.

7. Système (100) selon l'une quelconque des revendications précédentes, dans lequel la circuiterie de traitement (102a, 102b, 102c) est en outre configurée pour :
- déterminer que le véhicule (1) établit une connexion au réseau de communication étendu (50) ; et
générer une nouvelle clé de secours numérique (D-BU-K) configurée pour être stockée dans la mémoire (101a) du véhicule (1).

8. Procédé pour accorder un accès à un véhicule (1) lorsque le véhicule (1) n'est pas connecté à un réseau de communication étendu (50), le procédé comprenant :
- (S3) l'envoi, provenant d'un nœud distant (800) pour gérer une réservation d'un véhicule (1) vers un dispositif électronique (10), d'une clé régulière numérique (D-R-K) via le réseau de communication étendu (50) ;
- (S4a) la tentative d'envoi, provenant du nœud distant (800) vers le véhicule (1) via le réseau de communication étendu (50), d'une donnée de réservation de ladite réservation et de la clé régulière numérique (D-R-K), et en cas de détermination du fait que la donnée de réservation et la clé régulière numérique (D-R-K) ne peuvent pas être envoyées provenant du nœud distant (800) vers le véhicule (1) du fait que le véhicule (1) n'est pas connecté au réseau de communication étendu (50) :
- (S4b) l'envoi, provenant du nœud distant (800) vers le dispositif électronique (10), de la donnée de réservation et d'une clé de secours numérique (D-BU-K) ;
- (S5) l'envoi, provenant du dispositif électronique (10) vers le véhicule (1) via un réseau de communication local (55), de la clé de secours numérique (D-BU-K) ; et
- (S6a) la détermination si l'identifiant de la clé de secours numérique (D-BU-K), reçue au niveau du véhicule (1) provenant du dispositif électronique (10), est associé à l'identifiant d'une clé de secours numérique (D-BU-K) stockée dans la mémoire (101a) du véhicule (1), et
- en cas de détermination du fait que l'identifiant de la clé de secours numérique (D-BU-K) reçu au niveau du véhicule (1) provenant du dispositif électronique (10) est associé à l'identifiant de la clé de secours numérique (D-BU-K) stockée dans la mémoire (101a) du véhicule (1)
- l'octroi de l'accès à un système de gestion d'accès du véhicule (1) pour la réception de la donnée de réservation et/ou de la clé régulière numérique (D-R-K) au niveau du véhicule (1).

9. Procédé selon la revendication 8 comprenant en outre :
- (S1a) la génération de la clé de secours numérique (D-BU-K), configurée pour être distribuée via le réseau de communication étendu (50) ; et
- (S1b) le stockage de la clé de secours numérique (D-BU-K) dans la mémoire (101a) au niveau du véhicule (1).

10. Procédé selon l'une quelconque des revendications 8 à 9 comprenant en outre :
- (S2a) la réception, au niveau du nœud distant (800), d'une demande de réservation provenant du dispositif électronique (10) indicative d'une demande d'accès au véhicule (1) ; et
- (S2b) la génération, au niveau du nœud distant (800), de la donnée de réservation et de la clé régulière numérique (D-R-K) configurées pour accorder l'accès au véhicule (1).

11. Procédé selon l'une quelconque des revendications 8 à 10 comprenant en outre :
- (S6b) l'envoi, provenant du dispositif électronique (10) vers le véhicule (1) via le réseau de communication local (55), de la donnée de réservation et de la clé régulière numérique (D-R-K).

12. Procédé selon l'une quelconque des revendications 8-11 comprenant en outre :
- (S7) la détermination que le véhicule (1) établit une connexion au réseau de communication étendu (50) ; et
- la vérification, via le réseau de communication étendu (50) par le nœud distant (800), de la donnée de réservation et de la clé régulière numérique (D-R-K) précédemment reçues au niveau du véhicule (1) via le réseau de communication local (55).

13. Procédé selon la revendication 12 comprenant en outre :
- (S8) lors de la détermination que le véhicule (1) établit une connexion au réseau de communication étendu (50) :
- l'envoi, provenant du véhicule (1) vers le nœud distant (800), d'informations indicatives du fait que la clé de secours numérique (D-BU-K) stockée dans la mémoire (101a) du véhicule (1) est épuisée.

14. Procédé selon la revendication 13 comprenant en outre :
- (S9) lors de la détermination que le véhicule (1) établit une connexion au réseau de communication étendu (50) :
- la génération d'une nouvelle clé de secours numérique (D-BU-K) configurée pour être stockée dans la mémoire (101a) du véhicule (1).

15. Produit de programme informatique (500) comprenant un support lisible par ordinateur non transitoire, sur lequel se trouve un programme informatique comprenant des instructions de programme, le programme informatique étant chargeable dans une circuiterie de traitement (102a, 102b, 102c) et configuré pour provoquer l'exécution du procédé selon l'une quelconque des revendications 8 à 14 lorsque le programme informatique est exécuté par la circuiterie de traitement (102a, 102b, 102c).
